# FASCICULE DE BREVET EUROPEEN

(11) **EP 2 850 926 B1**
(45) Date de publication et mention de la délivrance du brevet: **01.03.2017**
(21) Numéro de dépôt: 14185945.4
(22) Date de dépôt: 23.09.2014
(51) Int. Cl.: A01C 1/02

(54) **Installation, notamment pour la germination de végétaux**
Anlage, insbesondere für das Keimen von Pflanzen
Installation, in particular for the germination of plants

(30) Priorité: 24.09.2013 FR 1359149
(43) Date de publication de la demande: 25.03.2015
(73) Titulaire: Sarl Thanadie, 85260 l'Herbergement (FR)
(72) Inventeur: Mechineau, Claude, 85600 Bouffere (FR)
(74) Mandataire: Godineau, Valérie

(56) Documents cités:
- WO-A1-01/15514
- BE-A- 411 513
- DE-A1- 2 826 907
- FR-A1- 2 621 211

## Description

La présente invention concerne une installation, notamment pour la germination de végétaux.

Elle concerne plus particulièrement une installation pour la germination de végétaux du type comprenant au moins deux cuves dites respectivement de germination et de collecte des jus, chaque cuve comprenant une entrée d'alimentation de la cuve et une sortie de vidange de la cuve, au moins la sortie de vidange de la cuve de germination étant une sortie obturable.

Les éleveurs utilisent de plus en plus fréquemment, pour l'alimentation des animaux, des produits et en particulier des céréales, notamment des graines de céréales germées, dont les propriétés nutritionnelles sont supérieures aux graines sèches.

Des installations pour la germination des céréales sont connues, comme l'illustrent en particulier les brevets US 4 821 455, US 4 765 092, FR 2 957 224, FR 2 602 647 et WO 01/15514.

Jusqu'à présent, la germination s'opère en usine et nécessite le transfert de la matière d'une installation à une autre, au cours du processus de germination. En outre, les conditions de germination ne sont pas optimisées et la qualité de jus produit est médiocre. Par ailleurs, ces installations sont encombrantes, non autonomes et ne permettent pas aisément une collecte séparée des germes et des jus résultant de la germination.

Un but de la présente invention est donc de proposer une installation dont la conception permet une simplification, un encombrement réduit, une autonomie importante et une collecte aisée, de manière séparée, des produits germés et des jus.

Un autre but de la présente invention est de proposer une installation dont la conception permet un enrichissement aisé, notamment en éléments protéinés, des jus, au fur et à mesure du processus de germination.

À cet effet, l'invention a pour objet une installation notamment pour la germination de végétaux, du type comprenant au moins deux cuves dites respectivement de germination et de collecte des jus, chaque cuve comprenant une entrée d'alimentation de la cuve et une sortie de vidange de la cuve, au moins la sortie de vidange de la cuve de germination étant une sortie obturable, la cuve de germination étant montée sur un châssis porteur avec le fond de la cuve de germination écarté de la surface d'appui au sol du châssis pour ménager, entre le fond de la cuve de germination et la surface d'appui au sol du châssis, un espace formant une zone de réception par écoulement gravitaire du contenu de la cuve de germination à l'intérieur de laquelle sont aptes à prendre place des moyens de collecte et/ou de distribution du contenu de ladite cuve de germination, la sortie de vidange obturable de ladite cuve de germination se présentant sous forme d'une conduite comprenant, disposées entre organe d'obturation et débouché de la conduite dans la cuve, une entrée et une sortie radiales reliées l'une à l'autre par une gaine poreuse s'étendant transversalement à la conduite, ladite entrée radiale étant raccordable à une source externe de gaz sous pression, et la cuve de collecte des jus, disposée à côté de la cuve de germination étant, au niveau de son entrée d'alimentation, reliée par un circuit de circulation de fluide à la sortie radiale de la cuve de germination, caractérisée en ce que l'installation comprend un dispositif de production d'acide hypochloreux, tel qu'un électrolyseur à membrane, raccordable à l'entrée d'alimentation de la cuve de germination et/ou à l'entrée d'alimentation d'une cuve de pré-germination disposée au-dessus de la cuve de germination lorsque ladite cuve de pré-germination est présente et en ce que la cuve de collecte des jus comprend des moyens de recirculation de son contenu en direction de la cuve de germination pour une circulation en boucle de fluide entre cuve de germination et cuve de collecte des jus.

La présence d'une gaine poreuse apte à être alimentée en air au niveau de la sortie de vidange des cuves de pré-germination et de germination permet un mélange aisé du contenu des cuves et un décolmatage régulier desdites gaines pour optimiser la collecte des jus.

La circulation en boucle des jus entre cuve de germination et cuve de collecte des jus permet un enrichissement des jus, améliorant leur qualité et permettant une valorisation plus aisée desdits jus.

La présence d'acide hypochloreux dans la solution aqueuse d'alimentation de la cuve de pré-germination et/ou de la cuve de germination permet d'éliminer un certain nombre de micro toxines et de sécuriser ainsi de façon optimale la consommation de graines germées par les animaux.

De préférence, l'installation comprenant une troisième cuve, dite de pré-germination, disposée au-dessus de la cuve de germination, ladite cuve de pré-germination comprend une entrée d'alimentation de la cuve et une sortie de vidange de la cuve.

La disposition en colonne des cuves de pré-germination et de germination permet de réduire l'encombrement au sol de l'installation et de faciliter le passage du contenu de la cuve de pré-germination dans la cuve de germination, par simple écoulement gravitaire.

De préférence, les moyens de recirculation comprennent un circuit de circulation de fluide disposé entre la sortie de vidange de la cuve de collecte des jus et l'entrée d'alimentation de la cuve de germination et des moyens de circulation forcée de fluide à l'intérieur dudit circuit.

Ces moyens de circulation forcée de fluide peuvent être formés par une simple pompe pilotable.

De préférence, l'entrée d'alimentation de la cuve de germination s'étend à l'aplomb de la sortie de vidange de la cuve de pré-germination lorsqu'elle est présente. Cette disposition facilite le transfert d'une cuve à une autre.

De préférence, chaque cuve présente un fond en forme générale d'entonnoir. À nouveau, la vidange est facilitée.

De préférence, l'installation comprend un distributeur apte à circuler dans l'espace formant la zone de réception par écoulement gravitaire du contenu de la cuve de germination.

Ce distributeur peut se charger en produits germés et aller les distribuer directement aux animaux de l'élevage situé au voisinage de ladite installation.

De préférence, le châssis présente, dans sa zone d'appui au sol, au moins un capteur de pesée.

Ce au moins un capteur de pesée facilite la gestion de l'installation.

De préférence, la sortie radiale des cuves de pré-germination et de germination est une sortie obturable équipée d'un organe d'obturation, de préférence pilotable.

La présence de ces organes d'obturation au niveau des sorties radiales permet, au niveau de la cuve de pré-germination, une mise à l'égout d'une partie des jus collectés à des périodes prédéterminées de la phase de pré-germination et, au niveau de la cuve de germination, un contrôle de l'alimentation en jus de la cuve de collecte des jus, pour éviter tout débordement de cette dernière.

De préférence, l'installation comprend une unité de pilotage des organes d'obturation des sorties de vidange et des sorties radiales, et des moyens de recirculation, au moins en fonction des données fournies par ledit au moins un capteur de pesée. L'installation peut ainsi fonctionner de manière entièrement autonome.

De préférence, la gaine poreuse entre entrée et sortie radiales présente des pores sous forme de fentes, les fentes de la gaine poreuse équipant la sortie de vidange de la cuve de germination étant de longueur et/ou de largeur supérieure(s) à celles des fentes de la gaine poreuse équipant la sortie de vidange de la cuve de pré-germination.

L'invention sera bien comprise à la lecture de la description suivante d'exemples de réalisation, en référence aux dessins annexés dans lesquels :

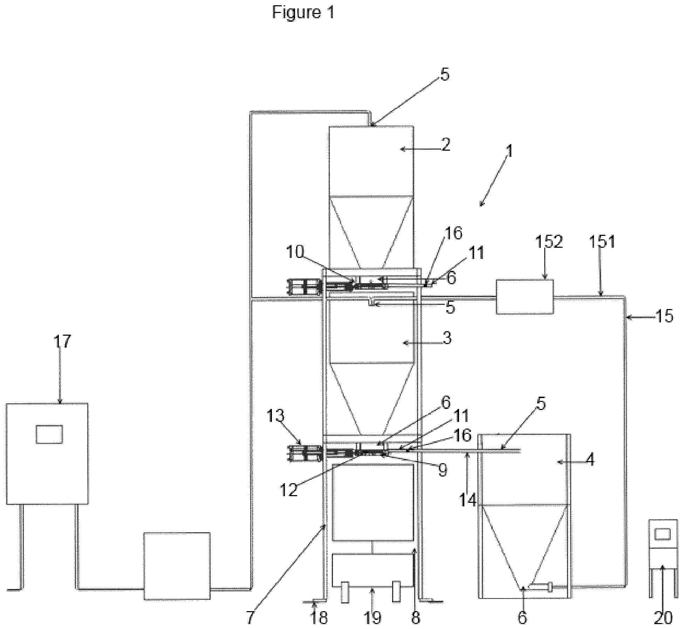

- la figure 1 représente une vue schématique d'une installation conforme à l'invention ;

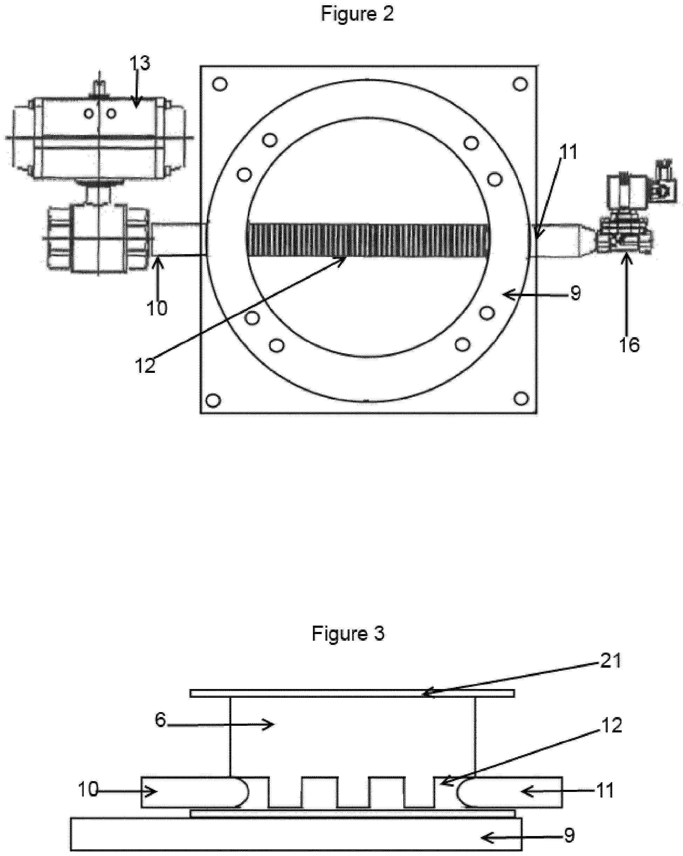

- la figure 2 représente une vue de dessous de la sortie de vidange de la cuve de pré-germination ou de germination ;
- la figure 3 représente une vue de côté de la figure 2.

Comme mentionné ci-dessus, l'installation 1 est plus particulièrement destinée à la germination de végétaux, en particulier de céréales. Cette installation est de préférence installée au voisinage d'un élevage d'animaux, pour utiliser les produits germés et les jus collectés dans l'alimentation desdits animaux.

Comme mentionné ci-dessus, l'installation peut comprendre au moins deux cuves 3, 4, à savoir une cuve 3 de germination et une cuve 4 de collecte des jus ou au moins trois cuves, représentées en 2, 3 et 4 aux figures, à savoir une cuve 2 de pré-germination, une cuve 3 de germination et une cuve 4 de collecte des jus. C'est ce deuxième mode de réalisation qui est illustré ci-dessous.

Chaque cuve comprend une entrée 5 d'alimentation de la cuve et une sortie 6 de vidange de la cuve.

Dans les exemples représentés, les sorties 6 de vidange de la cuve 2 de pré-germination et de la cuve 3 de germination sont obturées à l'aide d'un organe d'obturation, représenté en 9 aux figures.

Dans les exemples représentés, chaque cuve est une cuve de type silo, généralement métallique, à alimentation par le dessus ou éventuellement par le côté, comme dans le cas de la cuve 4 de collecte des jus.

Chaque cuve présente un fond en forme générale d'entonnoir. Ainsi, chaque cuve présente par exemple un fond avec une forme tronc-pyramidale ou tronconique inversée avec le sommet du tronc de cône ou de la pyramide équipé de la sortie 6 de vidange.

Cette sortie 6 de vidange est à chaque fois obturée par un organe 9 d'obturation formé ici par une vanne mobile entre une position fermée et une position ouverte de ladite sortie 6 de vidange.

L'installation comprend encore un châssis 7 porteur sur lequel les cuves 2 de pré-germination et 3 de germination sont installées, dans une position dans laquelle la cuve 2 de pré-germination est disposée au-dessus de la cuve 3 de germination.

L'entrée 5 d'alimentation de la cuve 3 de germination s'étend à l'aplomb de la sortie 6 de vidange de la cuve 2 de pré-germination.

Dans cette position, le fond de la cuve 3 de germination est écarté de la surface d'appui au sol du châssis, d'une distance par exemple au moins égale à un mètre, pour ménager entre le fond de la cuve de germination et la surface d'appui au sol du châssis un espace 8 formant une zone de réception par écoulement gravitaire du contenu de la cuve 3 de germination à l'intérieur de laquelle sont aptes à prendre place des moyens de collecte et/ou de distribution du contenu de ladite cuve 3 de germination.

Ces moyens 3 de distribution et de collecte peuvent être formés par un camion, un distributeur 19 ou autre.

Dans l'exemple représenté, l'installation comprend un distributeur 19, en l'occurrence un distributeur d'aliment, apte à circuler dans l'espace 8 formant la zone de réception par écoulement gravitaire du contenu de la cuve 3 de germination. Ce dispositif comprend une trémie avec sa face du dessus ouverte. Cette face du dessus est positionnable à l'aplomb de la sortie 6 de vidange de la cuve 3 de germination, pour récupérer les produits germés et les amener directement aux animaux. Ce distributeur est ici représenté avec des roues, mais aurait pu, de manière équivalente, être équipé de moyens d'entraînement en déplacement le long d'un chemin de guidage, comme cela est le cas dans les élevages traditionnels.

Pour supporter les cuves, le châssis 7 affecte la forme générale d'une colonne comprenant quatre montants et des moyens de maintien des montants parallèles entre eux. Des supports de réception des cuves sont prévus le long desdits montants.

Le châssis 7 présente, dans sa zone d'appui au sol, au moins un capteur 18 de pesée. Dans l'exemple représenté, chaque extrémité d'appui au sol d'un montant du châssis est équipée d'un tel capteur 18, dont le rôle sera décrit ci-après.

Dans les exemples représentés, les sorties 6 de vidange des cuves de pré-germination et de germination se présentent chacune sous forme d'une conduite comprenant, disposées entre organe 9 d'obturation et débouché 21 de la conduite dans la cuve, une entrée 10 et une sortie 11 radiales reliées l'une à l'autre par une gaine 12 poreuse s'étendant transversalement à la conduite. Cette gaine 12 poreuse entre entrée 10 et sortie 11 radiales présente des pores sous forme de fentes, les fentes de la gaine 12 poreuse équipant la sortie 6 de vidange de la cuve 3 de germination étant de longueur et/ou de largeur supérieure(s) à celles des fentes de la gaine 12 poreuse équipant la sortie 6 de vidange de la cuve 2 de pré-germination.

L'entrée 10 radiale de la sortie 6 d'obturation des cuves de pré-germination et de germination est à chaque fois raccordée à une source 13 extérieure de gaz sous pression formée ici par un compresseur qui délivre à volonté de l'air à la gaine poreuse. Cette alimentation en air permet d'une part, d'assurer un mélange du contenu de la cuve et d'autre part, de décolmater ladite gaine qui barre au moins partiellement ladite conduite dans laquelle elle s'étend.

L'alimentation en air des cuves peut être pilotée à partir de l'unité de pilotage qui sera décrite ci-après.

La sortie 11 radiale des cuves 2 de pré-germination et 3 de germination est une sortie obturable équipée d'un organe 16 d'obturation. Cet organe 16 d'obturation peut à nouveau se présenter sous forme d'une vanne.

L'installation comprend encore une cuve 4 de collecte des jus déportée par rapport à la colonne formée par les cuves de pré-germination et de germination. Cette cuve 4 de collecte est disposée à côté de la colonne formée par les cuves de pré-germination et de germination et est, au niveau de son entrée 5 d'alimentation, reliée par un circuit 14 de circulation de fluide à la sortie 11 radiale de la cuve 3 de germination.

Cette cuve comprend encore des moyens 15 de recirculation de son contenu en direction de la cuve 3 de germination, pour une circulation en boucle de fluide entre cuve 3 de germination et cuve 4 de collecte des jus.

Ces moyens 15 de recirculation comprennent un circuit 151 de circulation de fluide disposé entre la sortie 6 de vidange de la cuve 4 de collecte de jus et l'entrée 5 d'alimentation de la cuve 3 de germination et des moyens 152 de circulation forcée de fluide à l'intérieur dudit circuit 151. Ces moyens de circulation forcée de fluide sont ici formés par une simple pompe.

L'installation comprend encore un dispositif 17 de production d'acide hypochloreux raccordable à l'entrée 5 d'alimentation de la cuve 2 de pré-germination et/ou à l'entrée 5 d'alimentation de la cuve 3 de germination. Ce dispositif de production d'acide hypochloreux est formé par un électrolyseur à membrane. Cet électrolyseur comprend une enceinte à deux chambres séparées l'une de l'autre par une membrane. Chaque chambre contient une électrode apte à produire, l'une, de la soude, l'autre des ions H+ à partir de l'eau salée alimentant le dispositif. En sortie, le fluide aqueux servant à l'alimentation des cuves contient 80 % d'acide hypochloreux et des ions H+.

Les électrolyseurs à membrane actuellement sur le marché offrent à cet effet d'excellents résultats.

Pour permettre un fonctionnement automatique de l'installation, cette dernière peut comprendre une unité 20 de pilotage des organes 9, 16 d'obturation des sorties 6 de vidange et des sorties 11 radiales et des moyens 15 de recirculation, au moins en fonction des données fournies par ledit au moins capteur 18 de pesée.

L'unité de pilotage comprend des moyens de traitement électroniques et/ou informatiques de données, tels qu'un microprocesseur, et une mémoire de travail.

Lorsque l'expression "l'unité de pilotage est configurée pour" est utilisée, cela signifie que le microprocesseur comprend des instructions pour réaliser l'action. À partir desdites données d'entrées fournies d'une part, par le capteur de poids et d'autre part, par un opérateur via des moyens de fourniture d'entrée de données qui peuvent comprendre une interface d'entrée de données encore appelée "interface homme/machine" et/ou une mémoire de stockage de données prédéfinies et/ou des moyens d'acquisition de données, l'unité de pilotage est configurée pour commander le passage des organes d'obturation d'une position fermée à une position ouverte ou inversement, et la commande en fonctionnement des moyens de circulation forcée de fluide équipant les moyens de recirculation.

Cette unité de pilotage peut également être configurée pour commander en fonctionnement le dispositif de production d'acide hypochloreux et la source externe de gaz sous pression.

Le procédé pour la germination de végétaux, en particulier de graines de végétaux, notamment de céréales, comprend une phase de pré-germination et une phase de germination. Chaque phase comprend, après remplissage de la cuve associée en produit à traiter, une étape de remplissage de la cuve en solution aqueuse comprenant un désinfectant à base dudit acide hypochloreux, une étape de mélange du contenu de la cuve par injection d'air par la sortie de vidange de la cuve et une étape dite "d'égouttage" au cours de laquelle la solution aqueuse est éliminée et les produits traités sont, soit maintenus dans la cuve et soumis à un nouveau cycle de lavage comprenant les étapes de remplissage, de mélange et d'égouttage décrits ci-dessus, soit évacués de la cuve.

On supposera par la suite que les données relatives au temps de remplissage et d'égouttage et/ou aux quantités de fluide de remplissage, d'air et de solution aqueuse à évacuer ont été mémorisées.

Le fonctionnement de l'installation s'opère comme suit : dans un premier temps, la cuve de pré-germination est remplie en produit à germer. Une solution de trempage contenant de l'acide hypochloreux est introduite dans la cuve, de préférence par l'entrée 5 d'alimentation située sur le dessus de la cuve.

À l'issue d'une période de temps prédéterminée correspondant à une première période de trempage, la sortie radiale de la cuve est ouverte et la solution de trempage éliminée.

Au cours de la période de trempage, le contenu de la cuve de pré-germination est mélangé par injection d'air. Le cycle de trempage et d'égouttage ci-dessus peut être répété autant de fois que nécessaire.

Une fois que les produits à traiter commencent à germer, on évacue, après égouttage, ces produits vers la cuve de germination. Cette opération s'effectue par simple ouverture de l'organe d'obturation de la sortie de vidange de la cuve de pré-germination et transfert par gravité du contenu de la cuve de pré-germination vers la cuve de germination.

Au cours de la phase de germination, on procède de la même manière à une étape de trempage et d'égouttage, avec mélange à l'aide d'air au cours de la phase de trempage. La seule différence avec la phase de pré-germination concerne le fait que la solution aqueuse utilisée est, après un premier remplissage de la cuve de germination en solution aqueuse, évacuée vers la cuve 4 de collecte des jus avant d'être réinjectée dans la cuve de germination pour être réutilisée pour le trempage.

Ces phases de pré-germination et de germination peuvent durer plusieurs jours.

Le fonctionnement tel que décrit ci-dessus peut s'opérer de manière entièrement automatique, notamment lorsque le remplissage des cuves, en particulier en solution aqueuse, s'opère également automatiquement, à l'aide par exemple d'une pompe doseuse. Il en résulte une installation entièrement autonome.

Il est également possible d'envisager une commande manuelle de l'installation, en raison de la simplicité de ladite installation.

Les étapes de remplissage, de mélange et d'égouttage par vidange d'une partie du contenu de la cuve, peuvent être pilotées à l'aide des données fournies par les capteurs de pesée équipant le châssis. Ces données peuvent être complétées par des données fournies par des capteurs de niveau équipant éventuellement les cuves et par des données fournies par les moyens de fourniture d'entrée de données tels que décrits ci-dessus.

Dans le cas d'une installation à deux cuves, le fonctionnement de l'installation est similaire à celui décrit ci-dessus à l'exception du fait qu'on remplit directement la cuve de germination en produits à traiter. La recirculation de la solution aqueuse peut s'effectuer avec la solution aqueuse ayant servi au premier remplissage de la cuve de germination ou avec une solution aqueuse ayant servi au deuxième ou à un remplissage ultérieur de la cuve de germination.

## Revendications

1. Installation (1) notamment pour la germination de végétaux, du type comprenant au moins deux cuves (3, 4) dites respectivement de germination et de collecte des jus, chaque cuve (3, 4) comprenant une entrée (5) d'alimentation de la cuve et une sortie (6) de vidange de la cuve, au moins la sortie (6) de vidange de la cuve (3) de germination étant une sortie obturable, la cuve (3) de germination étant montée sur un châssis (7) porteur avec le fond de la cuve (3) de germination écarté de la surface d'appui au sol du châssis (7) pour ménager, entre le fond de la cuve de germination et la surface d'appui au sol du châssis (7), un espace (8) formant une zone de réception par écoulement gravitaire du contenu de la cuve (3) de germination à l'intérieur de laquelle sont aptes à prendre place des moyens de collecte et/ou de distribution du contenu de ladite cuve (3) de germination, la sortie (6) de vidange obturable de ladite cuve (3) de germination se présentant sous forme d'une conduite comprenant, disposées entre organe (9) d'obturation et débouché (21) de la conduite dans la cuve, une entrée (10) et une sortie (11) radiales reliées l'une à l'autre par une gaine (12) poreuse s'étendant transversalement à la conduite, ladite entrée (10) radiale étant raccordable à une source (13) externe de gaz sous pression, et la cuve de collecte des jus, disposée à côté de la cuve (3) de germination étant, au niveau de son entrée (5) d'alimentation, reliée par un circuit (14) de circulation de fluide à la sortie (11) radiale de la cuve (3) de germination,
**caractérisée en ce que** l'installation comprend un dispositif (17) de production d'acide hypochloreux, tel qu'un électrolyseur à membrane, raccordable à l'entrée (5) d'alimentation de la cuve (3) de germination et/ou à l'entrée (5) d'alimentation d'une cuve (2) de pré-germination disposée au-dessus de la cuve (3) de germination lorsque ladite cuve (2) de pré-germination est présente et **en ce que** la cuve (4) de collecte des jus comprend des moyens (15) de recirculation de son contenu en direction de la cuve (3) de germination pour une circulation en boucle de fluide entre cuve (3) de germination et cuve (4) de collecte des jus.

2. Installation (1) selon la revendication 1,
**caractérisée en ce que** ladite installation comprenant une troisième cuve (2), dite de pré-germination, disposée au-dessus de la cuve (3) de germination, ladite cuve (2) de pré-germination comprend une entrée (5) d'alimentation de la cuve et une sortie (6) de vidange de la cuve.

3. Installation (1) selon l'une des revendications précédentes,
**caractérisée en ce que** les moyens (15) de recirculation comprennent un circuit (151) de circulation de fluide disposé entre la sortie (6) de vidange de la cuve (4) de collecte des jus et l'entrée (5) d'alimentation de la cuve (3) de germination et des moyens (152) de circulation forcée de fluide à l'intérieur dudit circuit (151).

4. Installation (1) selon l'une des revendications précédentes,
**caractérisée en ce que** chaque cuve (2, 3, 4) présente un fond en forme générale d'entonnoir.

5. Installation (1) selon l'une des revendications précédentes,
**caractérisée en ce qu'**elle comprend un distributeur (19) apte à circuler dans l'espace (8) formant la zone de réception par écoulement gravitaire du contenu de la cuve (3) de germination.

6. Installation (1) selon l'une des revendications précédentes,
**caractérisée en ce que** le châssis (7) présente, dans sa zone d'appui au sol, au moins un capteur (18) de pesée.

7. Installation (1) selon la revendication 2,
**caractérisée en ce que** l'entrée (5) d'alimentation de la cuve (3) de germination s'étend à l'aplomb de la sortie (6) de vidange de la cuve (2) de pré-germination.

8. Installation (1) selon l'une des revendications précédentes
**caractérisée en ce que** la sortie (11) radiale de la cuve (3) de germination et celle de la cuve (2) de pré-germination lorsqu'elle est présente sont chacune une sortie obturable équipée d'un organe (16) d'obturation, de préférence pilotable.

9. Installation (1) selon la revendication 6 prise en combinaison avec la revendication 8,
**caractérisée en ce que** l'installation comprend une unité (20) de pilotage des organes (9, 16) d'obturation des sorties (6) de vidange et des sorties (11) radiales, et des moyens (15) de recirculation, au moins en fonction des données fournies par ledit au moins un capteur (18) de pesée.

10. Installation (1) selon l'une des revendications précédentes,
**caractérisée en ce que** la gaine (12) poreuse entre entrée (10) et sortie (11) radiales présente des pores sous forme de fentes, les fentes de la gaine (12) poreuse équipant la sortie (6) de vidange de la cuve (3) de germination étant de longueur et/ou de largeur supérieure(s) à celles des fentes de la gaine (12) poreuse équipant la sortie (6) de vidange de la cuve (2) de pré-germination lorsqu'elle est présente.

## Patentansprüche

1. Anlage (1), insbesondere für das Keimen von Pflanzen, der Art, die mindestens zwei Behälter (3, 4), die jeweils als Keimbehälter und als Saftsammelbehälter bezeichnet werden, umfasst, wobei jeder Behälter (3, 4) einen Versorgungseingang (5) des Behälters und einen Entleerungsausgang (6) des Behälters umfasst, wobei mindestens der Entleerungsausgang (6) des Keimbehälters (3) ein verschließbarer Ausgang ist, wobei der Keimbehälter (3) auf einem tragenden Rahmen (7) mit dem Boden des Keimbehälters (3) von der Stützfläche vom Boden des Rahmens (7) beabstandet montiert ist, um zwischen dem Boden des Keimbehälters und der Stützfläche auf dem Boden des Rahmens (7) einen Raum (8) auszubilden, der eine Empfangszone durch Gravitationsfließen des Inhalts des Keimbehälters (3) bildet, in dessen Inneren Sammel- und/oder Verteilungsmittel des Inhalts des Keimbehälters (3) platzierbar sind, wobei der verschließbare Entleerungsausgang (6) des Keimbehälters (3) die Form einer Leitung hat, die, angeordnet zwischen Verschlussorgan (9) und Mündung (21) der Leitung in den Behälter, einen radialen Eingang (10) und einen radialen Ausgang (11), die miteinander mittels eines porösen Mantels (12) verbunden sind, der sich transversal zur Leitung erstreckt, umfasst, wobei der radiale Eingang (10) mit einer externen Druckgasquelle (13) verbindbar ist, und wobei der Saftsammelbehälter, der neben dem Keimbehälter (3) angeordnet ist, im Bereich seines Versorgungseingangs (5) mittels einer Fluidzirkulationsleitung (14) mit dem radialen Ausgang (11) des Keimbehälters (3) verbunden ist,
**dadurch gekennzeichnet, dass** die Anlage eine Produktionsvorrichtung (17) hypochloriger Säure wie eine Membranzelle umfasst, die an den Versorgungseingang (5) des Keimbehälters (3) und/oder an den Versorgungseingang (5) eines Vorkeimbehälters (2), der über dem Keimbehälter (3) angeordnet ist, wenn der Vorkeimbehälter (2) vorhanden ist, anschließbar ist, und dass der Saftsammelbehälter (4) Rezirkulationsmittel (15) seines Inhalts in Richtung des Keimbehälters (3) für eine Fluidschleifenzirkulation zwischen Keimbehälter (3) und Saftsammelbehälter (4) umfasst.

2. Anlage (1) nach Anspruch 1,
**dadurch gekennzeichnet, dass** die Anlage einen dritten, als Vorkeimbehälter (2) bezeichneten Behälter umfasst, der über dem Keimbehälter (3) angeordnet ist, wobei der Vorkeimbehälter (2) einen Versorgungseingang (5) des Behälters und einen Entleerungsausgang (6) des Behälters umfasst.

3. Anlage (1) nach einem der vorangehenden Ansprüche,
**dadurch gekennzeichnet, dass** die Rezirkulationsmittel (15) einen Fluidzirkulationskreis (15), der zwischen dem Entleerungsausgang (6) des Saftsammelbehälters (4) und dem Versorgungseingang (5) des Keimbehälters (3) angeordnet ist, und Fluidzwangszirkulationsmittel (152) im Innern des Kreises (151) umfassen.

4. Anlage (1) nach einem der vorangehenden Ansprüche,
**dadurch gekennzeichnet, dass** jeder Behälter (2, 3, 4) einen Boden in allgemeiner Trichterform aufweist.

5. Anlage (1) nach einem der vorangehenden Ansprüche,
**dadurch gekennzeichnet, dass** sie einen Verteiler (19) umfasst, der imstande ist, in dem Raum (8) zu zirkulieren, der die Empfangszone durch Gravitationsfließen des Inhalts des Keimbehälters (3) bildet.

6. Anlage (1) nach einem der vorangehenden Ansprüche,
**dadurch gekennzeichnet, dass** der Rahmen (7) in seiner Stützzone auf dem Boden mindestens einen Wiegesensor (18) aufweist.

7. Anlage (1) nach Anspruch 2,
**dadurch gekennzeichnet, dass** sich der Versorgungseingang (5) des Keimbehälters (3) lotrecht zum Entleerungsausgang (6) des Vorkeimbehälters (2) erstreckt.

8. Anlage (1) nach einem der vorangehenden Ansprüche
**dadurch gekennzeichnet, dass** der radiale Ausgang (11) des Keimbehälters (3) und der des Vorkeimbehälters (2), wenn er vorhanden ist, jeweils ein verschließbarer Ausgang ist, der mit einem vorzugsweise steuerbaren Verschlussorgan (16) ausgestattet ist.

9. Anlage (1) nach Anspruch 6, herangezogen in Kombination mit Anspruch 8,
**dadurch gekennzeichnet, dass** die Anlage eine Steuereinheit (20) der Verschlussorgane (9, 16) der Entleerungsausgänge (6) und der radialen Ausgänge (11) umfasst, und Rezirkulationsmittel (15), mindestens in Abhängigkeit der von dem mindestens einem Wiegesensor (18) bereitgestellten Daten.

10. Anlage (1) nach einem der vorangehenden Ansprüche,
**dadurch gekennzeichnet, dass** der poröse Mantel (12) zwischen radialem Eingang (10) und radialem Ausgang (11) Poren in Form von Schlitzen aufweist, wobei die Schlitze des porösen Mantels (12), der den Entleerungsausgang (6) des Keimbehälters (3) ausstattet, länger und/oder breiter als die Schlitze des porösen Mantels (12) sind, der den Entleerungsausgang (6) des Vorkeimbehälters (2), wenn er vorhanden ist, ausstattet.

## Claims

1. An installation (1), in particular for the germination of plants, of the type comprising at least two basins (3, 4), respectively called germination and juice collection basins, each basin (3, 4) comprising a supply inlet (5) of the basin and an emptying outlet (6) of the basin, at least the emptying outlet (6) of the germination basin (3) being a closable outlet, the germination basin (3) being mounted on a support frame (7) with the bottom of the germination basin (3) separated from the support surface on the floor of the frame (7) to arrange, between the bottom of the germination basin and the support surface on the floor of the frame (7), a space (8) forming a receiving zone for receiving the content of the germination basin (3) by gravitational flow inside which means can be placed for collecting and/or distributing the content of said germination basin (3), the closable emptying outlet (6) of said germination basin (3) assuming the form of a conduit comprising, arranged between the closing off member (9) and the mouth (21) of the conduit in the basin, a radial inlet (10) and outlet (11) connected to one another by a porous sheath (12) extending transversely to the conduit, said radial inlet (10) being able to be connected to an outside pressurized gas source (13), and the juice collection basin, arranged next to the germination basin (3), being connected at its supply inlet (5) to the radial outlet (11) of the germination basin (3) by a fluid circulation circuit (14), **characterized in that** the installation comprises a device (17) for producing hypochlorous acid, such as a membrane electrolyzer, able to be connected to the supply inlet (5) of the germination basin (3) and/or to the supply inlet (5) of a pre-germination basin (2) arranged above the germination basin (3) when said pre-germination basin (2) is present and **in that** the juice collection basin (4) comprises means (15) for recirculating its content toward the germination basin (3) for circulation in a fluid loop between the germination basin (3) and the juice collection basin (4).

2. The installation (1) according to claim 1,
**characterized in that** said installation comprising a third basin (2), called pre-germination basin, arranged above the germination basin (3), said pre-germination basin (2) comprises a supply inlet (5) of the basin and an emptying outlet (6) of the basin.

3. The installation (1) according to one of the preceding claims,
**characterized in that** the recirculation means (15) comprise a fluid recirculation circuit (15) arranged between the emptying outlet (6) of the juice collection basin (4) and the supply inlet (5) of the germination basin (3) and means (152) for the forced circulation of fluid inside said circuit (151).

4. The installation (1) according to one of the preceding claims,
**characterized in that** each basin (2, 3) has a generally funnel-shaped bottom.

5. The installation (1) according to one of the preceding claims,
**characterized in that** it comprises a dispenser (19) able to circulate in the space (8) forming the receiving zone by gravitational flow of the content of the germination basin (3).

6. The installation (1) according to one of the preceding claims,
**characterized in that** the frame (7) has, in its support zone on the floor, at least one weight sensor (18).

7. The installation (1) according to claim 2,
**characterized in that** the supply inlet (5) of the germination basin (3) extends overhanging the emptying outlet (6) of the pre-germination basin (2).

8. The installation (1) according to one of the preceding claims,
**characterized in that** the radial outlet (11) of the germination basin (3) and that of the pre-germination basin (2) when it is present are each a closable outlet equipped with a closing off member (16), preferably controllable.

9. The installation (1) according to claim 6 combined with claim 8,
**characterized in that** the installation comprises a control unit (20) for the closing off members (9, 16) of the emptying outlet (6) and radial outlet (11), and recirculation means (15), at least based on data provided by said at least one weighing sensor (18).

10. The installation according to one of the preceding claims,
**characterized in that** the porous sheath (12) between the radial inlet (10) and outlet (11) has pores in the form of slits, the slits of the porous sheath (12) equipping the emptying outlet (6) of the germination basin (3) having a length and/or width larger than those of the slits of the porous sheath (12) equipping the emptying outlet (6) of the pre-germination basin (2) when it is present.
